# EUROPÄISCHE PATENTSCHRIFT

(11) **EP 2 841 298 B1**
(45) Veröffentlichungstag und Bekanntmachung des Hinweises auf die Patenterteilung: **07.04.2021**
(21) Anmeldenummer: 13716004.0
(22) Anmeldetag: 16.04.2013
(51) Int. Cl.: B60N 2/18, B60N 2/04, B60N 2/62

(54) **SITZLÄNGSVERSTELLUNG, SITZFLÄCHENNEIGUNGSVERSTELLUNG, FAHRZEUGSITZ**
LONGITUDINAL ADJUSTMENT MECHANISM FOR A SEAT, MECHANISM FOR ADJUSTING THE INCLINATION OF A SEAT PORTION, VEHICLE SEAT
SYSTÈME DE RÉGLAGE DE SIÈGE EN LONGUEUR, SYSTÈME DE RÉGLAGE D'INCLINAISON D'ASSISE DE SIÈGE, SIÈGE DE VÉHICULE

(30) Priorität: 25.04.2012 DE 102012008101; 20.07.2012 DE 102012014379
(43) Veröffentlichungstag der Anmeldung: 04.03.2015
(73) Patentinhaber: Adient Luxembourg Holding S.à r.l., 1855 Luxembourg (LU)
(72) Erfinder: MÜLLER, Sascha, 67657 Kaiserslautern (DE); KINZER, Andreas, 66424 Homburg (DE); KIRCH, Eckhard, 66851 Bann (DE); MÜHLBERGER, Joachim, 67271 Obersülzen (DE)
(74) Vertreter: Loock, Jan Pieter
(86) Internationale Anmeldenummer: PCT/EP2013/057862
(87) Internationale Veröffentlichungsnummer: WO 2013/160146

(56) Entgegenhaltungen:
- DE-A1- 19 943 573
- DE-U1-202004 020 657
- FR-A1- 2 386 430
- FR-A1- 2 761 833
- GB-A- 152 523
- US-A- 2 962 084

## Beschreibung

### Stand der Technik

Die vorliegende Erfindung betrifft einen Fahrzeugsitz.
Es ist aus dem Stand der Technik allgemein bekannt, die Sitze eines Fahrzeugs mittels einer Sitzlängsverstellung in Fahrtrichtung verstellbar auszubilden. Üblicherweise umfasst eine solche Sitzlängsverstellung einen auf dem Fahrzeugboden horizontal oder nach vorn unter einem Winkel ansteigend oder abfallend verlaufendes Schienensystem aus sitzfester Oberschiene und karosseriefester Unterschiene, wobei die Oberschiene und die Unterschiene mittels Kugel- oder Wälzkörper verschiebbar aufeinander gelagert sind. Eine Arretiereinheit sorgt dafür, den Fahrzeugsitz in einer gewünschten Gebrauchsposition zu arretieren. Zwischen der Oberschiene und einer vertikalen Sitzfläche des Fahrzeugsitzes weisen solche Fahrzeugsitze ferner einen Sitzflächenneigungsversteller auf, welcher eine Neigungsverstellung der Sitzfläche erlaubt.

Aus der Druckschrift DE 199 43 573 A1 ist ein Fahrzeugsitz für ein Kraftfahrzeug bekannt mit verbesserter Verstellfunktion bekannt. Der Sitz weist eine Sitzverstelleinrichtung auf, mit welcher der Sitz zwischen zwei Positionen in Richtung einer von hinten nach vorn verlaufenden Sitzlängsachse verstellbar ist. Diese Sitzverstelleinrichtung umfaßt ein Rohr, das am Fahrzeugboden schwenkbar gelagert ist, sowie eine im Rohr bidirektional verstellbar gelagerte Stange, die am Sitzunterteil schwenkbar gelagert ist. Außerdem weist die Sitzverstelleinrichtung eine Verriegelungseinrichtung auf, die das Rohr und die Stange in Axialstellungen relativ zueinander fixiert, die jeweils einer der Sitzpositionen zugeordnet sind.

Nachteilig an einer auf einem Schienensystem basierenden Sitzlängsverstellung ist, dass ein ebener Untergrund notwendig ist. Insbesondere für Fondsitze ist somit eine bauraumkompakte Integration eines Sitzlängsversteller nicht möglich.

### Offenbarung der Erfindung

Es ist die Aufgabe der vorliegenden Erfindung, einen Fahrzeugsitz bereit zu stellen, welcher kein auf dem Fahrzeugboden horizontal oder nach vorn unter einem Winkel ansteigend oder abfallend verlaufendes Schienensystem erfordert.

Diese Aufgabe wird gelöst mit einem Fahrzeugsitz nach Anspruch 1. Ein vorderes Ende der ersten Schwinge greift vorzugsweise drehgelenkig unterhalb einer Sitzfläche des Fahrzeugsitzes an, während ein hinteres Ende der ersten Schwinge vorzugsweise an einem karosseriefesten Unterbau des Fahrzeugsitzes drehgelenkig angreift. Eine Verstellung des Fahrzeugsitzes erfolgt durch eine Längenveränderung der ersten Schwinge und/oder durch eine Winkeländerung der Ausrichtung der ersten Schwinge. Denkbar ist, dass die Schwinge zur Längenveränderung einen Spindelantrieb oder einen Kolben-Zylinder-Antrieb umfasst. Ein weiterer Gegenstand der vorliegenden Erfindung ist ein Fahrzeugsitz aufweisend eine erfindungsgemäße Sitzlängsverstellung.

Eine bevorzugte Ausführungsform der vorliegenden Erfindung betrifft einen Fahrzeugsitz mit einer Sitzflächenneigungsverstelleinrichtung für die Sitzfläche des Fahrzeugsitzes, wobei die Neigungsverstellung eine zweite Schwinge umfasst, welche um eine zur Fahrtrichtung des Fahrzeugs senkrechte Querrichtung drehbar gelagert ist. Eine Neigungsverstellung zumindest eines Vorderteils des Fahrzeugsitzes erfolgt durch eine Längenveränderung einer Spindel und/oder durch eine Längsbewegung der Spindel und/oder durch eine Drehung der zweiten Schwinge. Das vordere Ende der zweiten Schwinge ist insbesondere in einer Kulisse unterhalb des Vorderteils der Sitzfläche längsverschiebbar geführt. Ein weiterer Gegenstand der vorliegenden Erfindung ist ein Fahrzeugsitz aufweisend eine erfindungsgemäße Neigungsverstellung.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Figurenbeschreibung

In den verschiedenen Figuren sind gleiche Teile stets mit den gleichen Bezugszeichen versehen und werden daher in der Regel auch jeweils nur einmal benannt bzw. erwähnt.

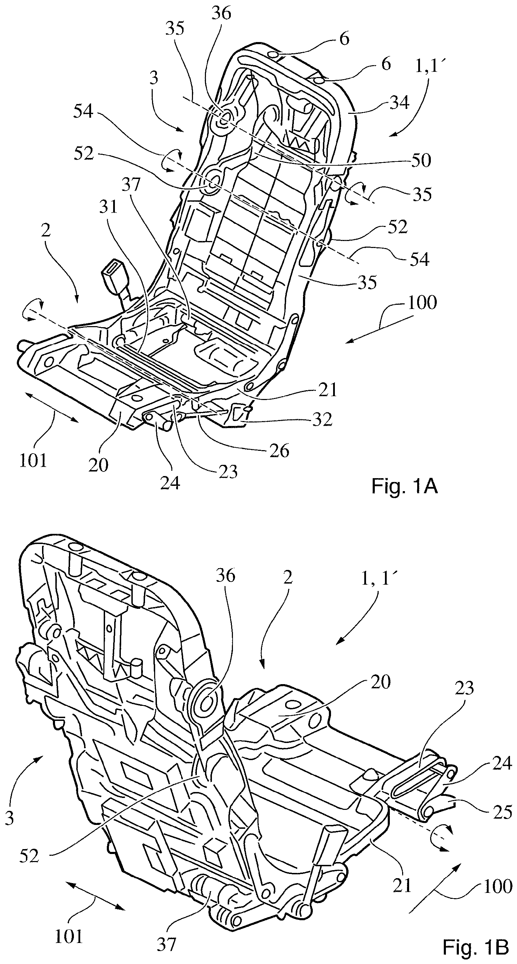

In **Figuren 1A und 1B** sind schematische Perspektivansichten eines Fahrzeugsitzes 1 für ein Kraftfahrzeug dargestellt. Es handelt sich hierbei insbesondere um einen Fahrzeugsitz 1 für den Fahrzeugfond des Kraftfahrzeugs. Der Fahrzeugsitz 1 umfasst ein Sitzteil 2, sowie eine Rückenlehne 3. Das Sitzteil 2 definiert eine Sitzfläche für einen Fahrzeuginsassen und umfasst ein Vorderteil 20, sowie ein Hauptteil 21. Der Hauptteil 21 ist drehgelenkig an einer ersten Schwinge 31 gelagert. Das Vorderteil 20 weist an seiner Unterseite eine Kulissenführung 23 auf, in welche ein erstes Ende einer zweiten Schwinge 24 drehgelenkig, um eine Querachse gelagert ist, welche sich entlang einer zur Fahrtrichtung 100 senkrechten Querrichtung 101 erstreckt, wobei das erste Ende in der Kulissenführung 23 in Fahrtrichtung 100 längsverschiebbar gelagert ist. Das zweite Ende der zweiten Schwinge 24 ist drehgelenkig an einer am Fahrzeugboden befestigten Halterung 25 angebunden. An der zweiten Schwinge 24 ist ferner ein erstes Ende einer Spindel 26 drehbar angebunden.

Der Hauptteil 21 des Fahrzeugsitzes 1 ist über eine erste Schwinge 31 an einem karosseriefesten Unterbau 40 des Fahrzeugsitzes 1 befestigt. Ein erstes Ende der ersten Schwinge 31 ist mit dem Hauptteil 21 drehbar verbunden, während das zweite Ende der ersten Schwinge 31 drehbar am Unterbau 40 befestigt ist. Die erste Schwinge 31 umfasst vorzugsweise eine Längsverstelleinheit zur Verstellung der Länge der ersten Schwinge 31, beispielsweise über eine Zylinder-Kolben-Führung oder einen Spindelantrieb. Die erste Schwinge 31 ist somit Teil einer Sitzlängsverstellung für den Fahrzeugsitz 1, da eine Längsveränderung der ersten Schwinge 31 eine Bewegung des Sitzteils 2 in Fahrtrichtung 100 bewirkt. Über einen Antrieb 37 ist ferner vorzugsweise der Winkel der ersten Schwinge 31 gegenüber dem Unterbau 40 veränderbar, so dass über eine Winkelveränderung der ersten Schwinge 31 die Höhe des Sitzteils 2 veränderbar ist. Die erste Schwinge 31 bildet somit vorzugsweise auch einen Teil einer Höhenverstellung für den Fahrzeugsitz 1.

Über einen weiteren Antrieb 32 ist die Lage der zweiten Schwinge 24 relativ zum Unterbau 40 veränderbar ist. Auf diese Weise kann die Neigung des Vorderteils 20 verändert werden. Hierdurch wird ferner die Neigung der Sitzfläche des Sitzteils 2 verändert. Der Antrieb 32 mit der Spindel 26 ist daher Teil einer Sitzflächenneigungsverstellung für den Fahrzeugsitz 1.

Der Fahrzeugsitz 1 weist ferner eine Lehnenneigungsverstellung auf. Die Lehnenneigungsverstellung umfasst eine vierte Schwinge 50, dessen erstes Ende drehgelenkig an der Rückenlehne 3 angebunden ist und dessen zweites Ende an einer fahrzeugfesten Halteklammer 51 drehgelenkig angebunden ist. Das erste Ende der vierten Schwinge 50 ist über eine Verstelleinheit 52, insbesondere ein Taumelgetriebe oder ein Rast-Klinken-Versteller, drehgelenkig um eine Drehachse 54 an die Rückenlehne 3 angebunden. Die Verstelleinheit 52 ermöglicht dabei eine Winkelveränderung zwischen der Rückenlehne 3 und der vierten Schwinge 50, wodurch sich die Neigung der Rückenlehne 3 verändert. Das zweite Ende der vierten Schwinge 50 ist vorzugsweise in einer Kulissenführung 53 der Halteklammer 51 befestigt. Die Verstelleinheit 52 weist vorzugsweise einen Antrieb auf, so dass eine motorgestützte Verstellung der Rückenlehnenneigung ermöglicht wird.

Die Rückenlehne 3 des Fahrzeugsitzes 1 umfasst vorzugsweise ein Rückenlehnenhauptteil 33, sowie ein Rückelehnenoberteil 34, wobei das Rückenlehnenhauptteil 33 und das Rückenlehnenoberteil 34 über eine gemeinsame zweite Schwenkachse 35 drehgelenkig miteinander verbunden sind. Die zweite Schwenkachse 35 verläuft parallel zur Querrichtung 101. Das Rückenlehnenhauptteil 33 und das Rückenlehnenoberteil 34 sind im Bereich der zweiten Schwenkachse 35 insbesondere mittels einer weiteren Verstelleinheit 36 derart miteinander gekoppelt, dass eine Verstellung der weiteren Verstelleinheit 36 eine Veränderung des Winkels zwischen dem Rückenlehnenhauptteil 33 und dem Rückenlehnenoberteil 34 um die zweite Schwenkachse 35 bewirkt. Die weitere Verstelleinheit 36 umfasst insbesondere ein motorgetriebenes Taumelgetriebe oder einen Rast-Klinken-Versteller. Die weitere Verstelleineit 36 ist insbesondere Teil einer Rückenlehnenkrümmungsverstellung. Am oberen Ende des Fahrzeugsitzes 1 und insbesondere des Rückenlehnenoberteils 34 ist eine Kopfstütze 4 angebunden. Vorzugsweise sind hierfür zwei Haltestangen 5 der Kopfstütze 4 in Führungsbuchsen 6 der Rückenlehne 3 befestigt. Die Kopfstütze 4 ist insbesondere höhenverstellbar in den Führungsbuchsen 6 vorgesehen, so dass die Führungsbuchsen 6 insbesondere Teil eines Kopfstützenhöhenverstellers sind.

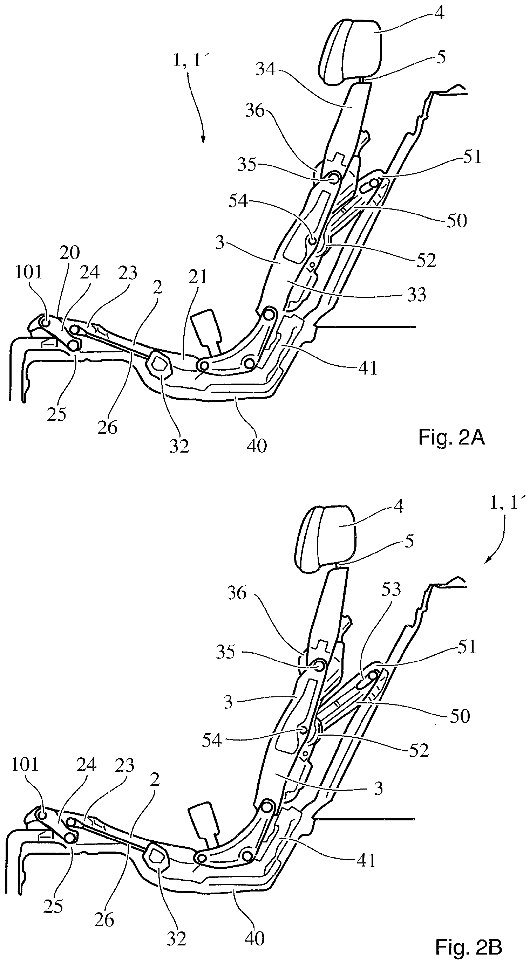

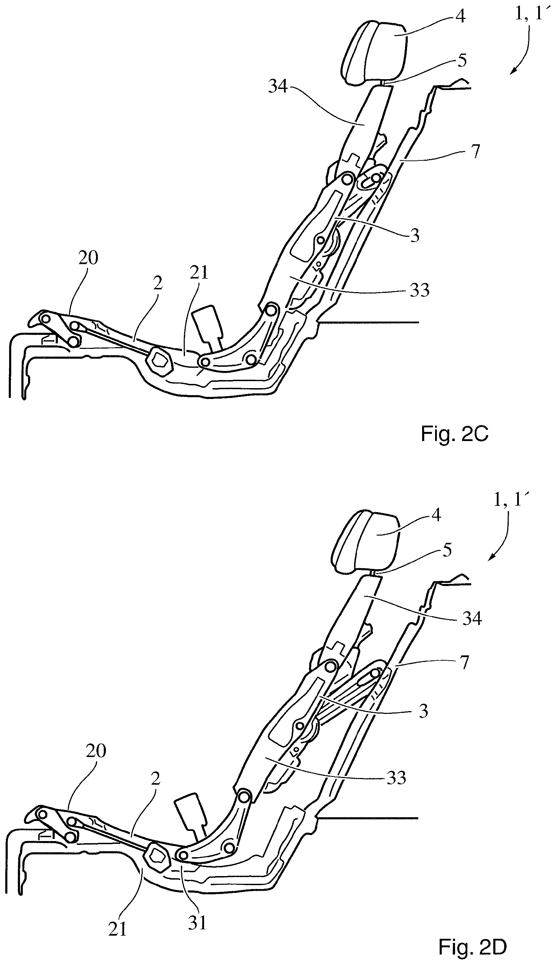

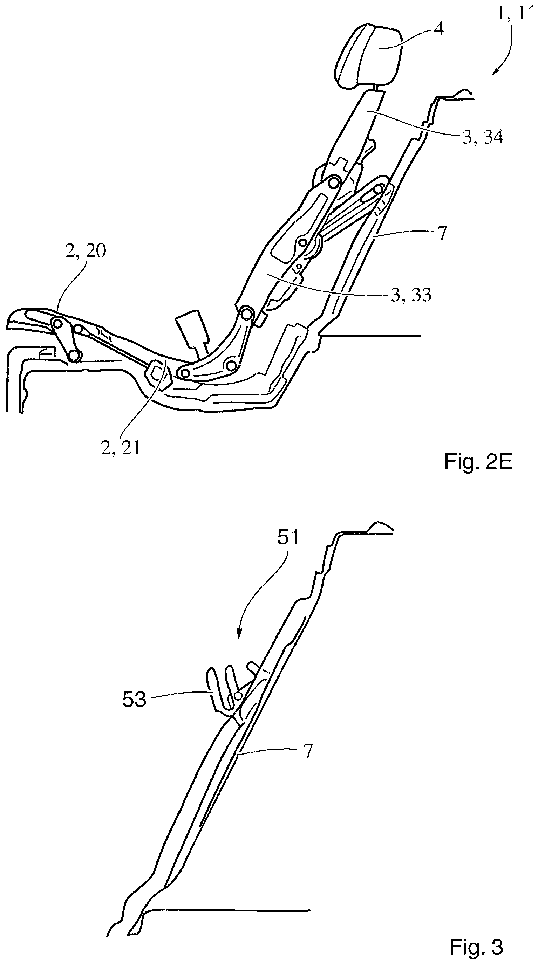

In **Figuren 2A bis 2E** sind Seitenansichten des erfindungsgemäßen Fahrzeugsitzes 1 dargestellt, in welchen der Fahrzeugsitz 1 in unterschiedlichen Positionen angeordnet ist. In Figur 2A ist eine Ausgangsstellung des Fahrzeugsitzes 1 illustriert. In Figur 2B ist die Rückenlehne 3 mittels der Lehnenneigungsverstellung in eine gegenüber der Ausgangsstellung vorgeschwenkte Position verlagert. In Figur 2C ist die Rückenlehne 3 mittels der Lehnenneigungsverstellung in eine gegenüber der Ausgangsstellung zurückgeschwenkte Position verlagert. In Figur 2D ist das Sitzteil 2 mittels der Sitzlängsverstellung in eine gegenüber der Ausgangsstellung vorgelagerte Position verlagert, wodurch sich gleichzeitig der Neigungswinkel des Rückenlehnenhauptteils 33 gegenüber der Ausgangsstellung verändern hat. Das Rückenlehnenhauptteil 33 befindet sich in einer flacheren Ausrichtung. Das Rückenlehnenoberteil 34 verbleibt in der Ausgangsstellung, so dass sich durch die Vorverlagerung des Sitzteils 2 auch die Rückenlehnenkrümmung bzw. der Verlauf der Rückenlehne 3 verändert hat. In Figur 2E befindet sich das Rückenlehnenoberteil 34 in einer mittels der Rückenlehnenkrümmungsverstellung gegenüber der Ausgangsstellung zurückgeschwenkten Position, so dass die aus der Ausgangsstellung bekannte Rückenlehnenkrümmung bzw. Verlauf der Rückenlehne 3 wiederhergestellt ist. Durch die Veränderung der Winkellage des Rückenlehnenoberteils 34 hat sich ferner auch die Ausrichtung der Kopfstütze 4 entsprechend verändert.

In **Figur 3** ist eine schematische Detailansicht der an einer Fahrzeugbasis 7 befestigten Halteklammer 51 dargestellt. In dieser Ansicht ist deutlich die einseitig offene Kulissenführung 53 zu sehen, in welcher das zweite Ende der vierten Schwinge 50 läuft.

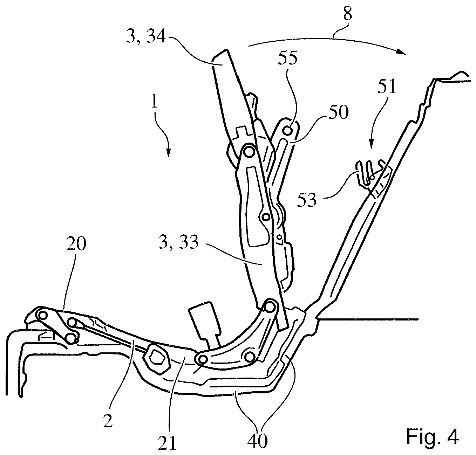

In **Figur 4** ist das Montageverfahren zur Montage des Fahrzeugsitzes 1 im Fahrzeug illustriert, wobei in einem ersten Schritt zunächst der Fahrzeugsitz 1 in einer mit einer vorverlagerten Rückenlehne 3 befindlichen Konfiguration bereitgestellt wird und in einem nachfolgenden zweiten Schritt auf dem Unterbau 40 befestigt wird. In einem anschließenden zweiten Schritt wird die Rückenlehne 3 im Rahmen einer Schwenkbewegung 8 zurückgeschwenkt, so dass ein am zweiten Ende der vierten Schwinge 50 befindlicher Bolzen 55 in Eingriff mit der einseitig offenen Kulissenführung 53 gelangt. Der Fahrzeugsitz 1 ist anschließend fixiert.

### BEZUGSZEICHENLISTE

- 1: Fahrzeugsitz
- 2: Sitzteil
- 3: Rückenlehne
- 4: Kopfstütze
- 5: Haltestange
- 6: Führungsbuchse
- 7: Fahrzeugbasis
- 8: Schwenkbewegung
- 20: Vorderteil
- 21: Hauptteil
- 23: Kulissenführung
- 24: Zweite Schwinge
- 25: Halterung
- 26: Spindel
- 31: Erste Schwinge
- 32: Antrieb
- 33: Rückenlehnenhauptteil
- 34: Rückelehnenoberteil
- 35: Zweite Schwenkachse
- 36: Weitere Verstelleinheit
- 37: Spindelantrieb
- 40: Unterbau
- 41: Steuerbox
- 50: Vierte Schwinge
- 51: Halteklammer
- 52: Verstelleinheit
- 53: Weitere Kulissenführung
- 54: Drehachse
- 55: Bolzen
- 100: Fahrtrichtung
- 101: Querrichtung

## Patentansprüche

1. Fahrzeugsitz (1) für ein Fahrzeug, aufweisend eine Verstelleinheit (1'), wobe die Verstelleinheit (1') eine Sitzlängsverstellung zur Verstellung des Fahrzeugsitzes (1) entlang einer Fahrtrichtung (100) des Fahrzeugs umfasst, wobei die Sitzlängsverstellung eine erste Schwinge (31) umfasst, welche um eine zur Fahrtrichtung (100) des Fahrzeugs senkrechte Querrichtung (101) drehbar gelagert ist,
wobei die Verstelleinheit (1') eine Sitzflächenneigungsverstellung zur Neigungsverstellung der Sitzfläche des Fahrzeugsitzes (1) umfasst, wobei die Neigungsverstellung eine zweite Schwinge (24) umfasst, welche um eine zur Fahrtrichtung (100) des Fahrzeugs senkrechte Querrichtung (101) drehbar gelagert ist,
**dadurch gekennzeichnet,**
**dass** ein Vorderteil (20) des Fahrzeugsitzes (1) an seiner Unterseite eine Kulissenführung (23) aufweist, in welche ein erstes Ende der zweiten Schwinge (24) drehgelenkig um eine Querachse gelagert ist, welche sich entlang der Querrichtung (101) erstreckt, wobei das erste Ende in der Kulissenführung (23) in Fahrtrichtung (100) längsverschiebbar gelagert ist, wobei ein zweites Ende der zweiten Schwinge (24) drehgelenkig an einer am Fahrzeugboden befestigten Halterung (25) anbindbar ist.

2. Fahrzeugsitz (1) nach Anspruch 1, wobei ein vorderes Ende der ersten Schwinge (31) drehgelenkig an einer Sitzfläche des Fahrzeugsitzes (1) angreift und wobei ein hinteres Ende der ersten Schwinge (31) an einem karosseriefesten Unterbau des Fahrzeugsitzes (1) drehgelenkig angreift.

3. Fahrzeugsitz (1) nach Anspruch 2, wobei die Verstelleinheit (1') derart konfiguriert ist, dass eine Verstellung des Fahrzeugsitzes (1) durch eine Längenveränderung der ersten Schwinge (31) und/oder durch eine Winkeländerung der Ausrichtung der ersten Schwinge (31) erfolgt.

4. Fahrzeugsitz (1) nach Anspruch 3, wobei die Schwinge zur Längenveränderung einen Spindelantrieb oder einen Kolben-Zylinder-Antrieb umfasst.

5. Fahrzeugsitz (1) nach einem der vorhergehenden Ansprüche, wobei die Neigungsverstellung derart konfiguriert ist, dass eine Neigungsverstellung zumindest des Vorderteils (20) des Fahrzeugsitzes (1) durch eine Längenveränderung der Spindel (26) und/oder durch eine Längsbewegung der Spindel (26) und/oder durch eine Drehung der zweiten Schwinge (24) erfolgt.

## Claims

1. Vehicle seat (1) for a vehicle, having an adjustment unit (1'), wherein the adjustment unit (1') comprises a seat longitudinal adjustment mechanism for adjusting the vehicle seat (1) along a direction of travel (100) of the vehicle, wherein the seat longitudinal adjustment mechanism comprises a first rocker (31) which is mounted rotatably about a transverse direction (101) which is perpendicular to the direction of travel (100) of the vehicle, wherein the adjustment unit (1') comprises a seat surface inclination adjustment mechanism for adjusting the inclination of the seat surface of the vehicle seat (1), wherein the inclination adjustment mechanism comprises a second rocker (24) which is mounted rotatably about a transverse direction (101) which is perpendicular to the direction of travel (100) of the vehicle,
**characterized**
**in that** the lower side of a front part (20) of the vehicle seat (1) has a slotted guide (23) in which a first end of the second rocker (24) is mounted in the manner of a rotary hinge about a transverse axis which extends along the transverse direction (101), wherein the first end is mounted in a longitudinally displaceable manner in the direction of travel (100) in the slotted guide (23), wherein a second end of the second rocker (24) can be connected in the manner of a rotary hinge to a holder (25) fastened to the vehicle floor.

2. Vehicle seat (1) according to Claim 1, wherein a front end of the first rocker (31) acts in the manner of a rotary hinge on a seat surface of the vehicle seat (1), and wherein a rear end of the first rocker (31) acts in the manner of a rotary hinge on a body-mounted substructure of the vehicle seat (1).

3. Vehicle seat (1) according to Claim 2, wherein the adjustment unit (1') is configured in such a manner that the vehicle seat (1) is adjusted by a change in length of the first rocker (31) and/or by a change in angle of orientation of the first rocker (31).

4. Vehicle seat (1) according to Claim 3, wherein the rocker comprises a spindle drive or a piston-cylinder drive for the change in length.

5. Vehicle seat (1) according to one of the preceding claims, wherein the inclination adjustment mechanism is configured in such a manner that an adjustment of the inclination at least of the front part (20) of the vehicle seat (1) takes place by a change in length of the spindle (26) and/or by a longitudinal movement of the spindle (26) and/or by a rotation of the second rocker (24).

## Revendications

1. Siège de véhicule (1) pour un véhicule, présentant une unité de réglage (1'), l'unité de réglage (1') comprenant un réglage longitudinal de siège pour régler le siège de véhicule (1) le long d'une direction de conduite (100) du véhicule, le réglage longitudinal de siège comprenant une première bielle (31) qui est supportée de manière rotative autour d'une direction transversale (101) perpendiculaire à la direction de conduite (100) du véhicule,
l'unité de réglage (1') comprenant un réglage d'inclinaison de la surface de siège pour régler l'inclinaison de la surface de siège du siège de véhicule (1), le réglage d'inclinaison comprenant une deuxième bielle (24) qui est supportée de manière rotative autour d'une direction transversale (101) perpendiculaire à la direction de conduite (100) du véhicule,
**caractérisé en ce**
**qu'**une partie avant (20) du siège de véhicule (1) présente, au niveau de son côté inférieur, un guide à coulisse (23) dans lequel une première extrémité de la deuxième bielle (24) est supportée par une articulation pivotante autour d'un axe transversal qui s'étend le long de la direction transversale (101), la première extrémité étant supportée de manière déplaçable longitudinalement dans le guide à coulisse (23) dans la direction de conduite (100), une deuxième extrémité de la deuxième bielle (24) pouvant être raccordée par une articulation pivotante à une fixation (25) fixée au plancher du véhicule.

2. Siège de véhicule (1) selon la revendication 1, dans lequel une extrémité avant de la première bielle (31) s'engage par une articulation pivotante avec une surface de siège du siège de véhicule (1) et une extrémité arrière de la première bielle (31) s'engage par une articulation pivotante avec un dessous de caisse du siège de véhicule (1) fixé à la carrosserie.

3. Siège de véhicule (1) selon la revendication 2, dans lequel l'unité de réglage (1') est configurée de telle sorte qu'un réglage du siège de véhicule (1) soit effectué par une variation de longueur de la première bielle (31) et/ou par une variation angulaire de l'orientation de la première bielle (31) .

4. Siège de véhicule (1) selon la revendication 3, dans lequel la bielle prévue pour la variation de longueur comprend un entraînement à broche ou un entraînement à cylindre et piston.

5. Siège de véhicule (1) selon l'une quelconque des revendications précédentes, dans lequel le réglage d'inclinaison est configuré de telle sorte qu'un réglage d'inclinaison d'au moins la partie avant (20) du siège de véhicule (1) soit effectué par une variation de longueur de la broche (26) et/ou par un déplacement longitudinal de la broche (26) et/ou par une rotation de la deuxième bielle (24).
